(19) Europäisches Patentamt European Patent Office Office européen des brevets

(11) **EP 1 969 024 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(21) Anmeldenummer: **06840978.8**

(22) Anmeldetag: **14.12.2006**

(51) Int Cl.:
*C08G 2/10* (2006.01)       *C08G 2/34* (2006.01)
*C08G 2/36* (2006.01)

(86) Internationale Anmeldenummer:
**PCT/EP2006/012028**

(87) Internationale Veröffentlichungsnummer:
**WO 2007/073874 (05.07.2007 Gazette 2007/27)**

(54) **VERFAHREN ZUR HERSTELLUNG VON OXYMETHYLEN-POLYMEREN**

METHOD FOR PRODUCING OXYMETHYLENE-POLYMERS

PROCEDE DE PRODUCTION DE POLYMERES D'OXYMETHYLENE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.12.2005 DE 102005062326**

(43) Veröffentlichungstag der Anmeldung:
**17.09.2008 Patentblatt 2008/38**

(73) Patentinhaber: **Ticona GmbH**
**65451 Kelsterbach (DE)**

(72) Erfinder:
• **HAUBS, Michael**
  **55545 Bad Kreuznach (DE)**
• **CLAUSS, Joachim**
  **64297 Darmstadt-Eberstadt (DE)**
• **HOFFMOCKEL, Michael**
  **65527 Niedernhausen (DE)**
• **LINGNAU, Jürgen**
  **55130 Mainz-Laubenheim (DE)**
• **SCHNELLER, Arnold**
  **64342 Seeheim-Jugenheim (DE)**

(74) Vertreter: **Lahrtz, Fritz et al**
**Isenbruck Bösl Hörschler LLP**
**Patentanwälte**
**Prinzregentenstrasse 68**
**81675 München (DE)**

(56) Entgegenhaltungen:
**EP-A- 0 308 186      GB-A- 1 524 410**
**GB-A- 1 524 440      US-A1- 4 158 091**
**US-A1- 4 220 740**

EP 1 969 024 B1

**Beschreibung**

Die vorliegende Erfindung betrifft ein verbessertes Verfahren zur Herstellung von Oxymethylen-Homo- und -Copolymeren sowie ausgewählte Oxymethylen-Homo-und -Copolymere und deren Verwendung.

Die Herstellung von Polyoxymethylenen ist an sich bekannt. Die Polymerisation kann sowohl in Masse als auch in Lösung als Fällungspolymerisation sowie drucklos oder unter Druck erfolgen. Zur Herstellung von Oxymethylenpolymeren sind auch bereits Kettenüberträger, beispielsweise Methylal, eingesetzt worden.

Bei der kationisch initiierten Variante der Polymerisation werden kationische Initiatoren eingesetzt. Nachteilig beim Einsatz von kationischen Initiatoren ist, daß diese auch die Rückreaktion, also den Abbau des POM in Formaldehyd, katalysieren. Nach erfolgter Polymerisation muß daher das Reaktionsgemisch desaktiviert werden.

Es sind bereits unterschiedlichste Verfahren zur Desaktivierung von Reaktionsgemischen bekannt. Diese lassen sich einteilen in Verfahren, bei denen die Polymerschmelze mit einem basischen Deaktivator behandelt wird, oder in Verfahren, bei denen protische Verbindungen, wie Methanol, eingesetzt werden.

Bei der Polymerisation und der Depolymerisation von Oxymethylenpolymeren handelt es sich um sehr schnelle Reaktionen. Eine Deaktivierung aktiver Bestandteile im Reaktionsgemisch muss also rasch und möglichst vollständig erfolgen, um das erzeugte Polymere möglichst wenig zu schädigen. Bei der Deaktivierung in der Polymerschmelze begrenzt die Viskosität die Geschwindigkeit des Einmischens des Desaktivators. Die Viskosität lässt sich zwar durch Temperaturerhöhung steigern, doch begünstigt dies auch die Geschwindigkeit des Polymerabbaus. Bei der Deaktivierung mit protischen Verbindungen erfolgt bei erhöhten Temperaturen eine Kettenspaltung, beispielsweise durch Wasserstoff-Übertragungsreaktion.

Bei der Synthese von Oxymethylen-Homo- und -Copolymeren wurden zur Desaktivierung des Polymerisationsgemisches Lösungen von Basen in nichtprotischen Flüssigkeiten, beispielsweise in Aceton, eingesetzt. Hierbei wurde das Polymerisationsgemisch entweder gemahlen und dann in die Lösung von Base in nicht-protischer Flüssigkeit eingetragen oder die Mahlung erfolgte bereits in Gegenwart der genannten Base/Flüssigkeits-Lösung. Die Base/Flüssigkeits-Lösung löst das das Oxymethylenpolymere jedoch nicht. Stattdessen erhält man eine Suspension von fein vermahlenem Oxymethylenpolymer in dieser Lösung. Auch hier ergibt sich das Problem einer nicht ausreichenden oder einer nicht ausreichend raschen Desaktivierung des Polymeren.

Beispiele für die oben beschriebenen Deaktivierungsverfahren werden in den DE-A-44 36 107, US-A-3,269,988, EP-B-1,200,500, DE-A-30 18 898, EP-A-80,656, JP-A-62/267,311, JP-A-2000/290,334, JP-A-2000/290,336, GB-A-1,524,410, GB-A-1,040,171 und JP-A-57/080,414 beschrieben.

JP-A-04/114,003 und JP-A-04/145,114 beschreiben die Deaktivierung des Polymerisationskatalysators in Oxymethylen-Homo- oder -Copolymerge-mischen durch Zugabe von Mischungen ausgewählter Oxide und Auf-schmelzen der Mischung.

Es ist bereits seit langem bekannt, die Stabilität von Oxymethylenpolymeren durch die Verkappung der Endgruppen, beispielsweise durch Einführung von Ether- oder Ester-Endgruppen, zu erhöhen. Beispiele dafür finden sich in den DE-AS-1,158,709, US-A-3,998,791, US-A-3,393,179, DE-A-1,445,255, DE-AS-1,158,709, US-A-4,097,453 und US-A-3,161,616.

Die GB 1 524 440 betrifft ein Verfahren zur Verbesserung der thermischen und chemischen Stabilität von veretherten Acetal-Homopolymeren und Acteal-Copolymeren.

Während mit Ester-Endgruppen verkappte Oxymethylenpolymere bei erhöhten Temperaturen oder in basischen oder säuren Umgebungen abgebaut werden, zeichnen sich mit Ether-Endgruppen verkappte Oxymethylenpolymere durch eine sehr hohe Stabilität aus. Die bisher vorgeschlagenen Verfahren zur Herstellung dieser Polymeren umfassten jedoch stets einen separaten Schritt zur Verkappung der Polymeren. Diese separate Umsetzung führt zwar zu einer deutlich gesteigerten Stabilität der Polymeren; weitere Verbesserungen sind jedoch wünschenswert, da die Formaldehydemission bei der Weiterver-arbeitung und Anwendung möglichst gering gehalten und nach Möglichkeit ganz ausgeschlossen werden soll.

Es besteht außerdem ein ständiger Bedarf nach verbesserten Herstellungsverfahren, um dem allgegenwärtigen Kostendruck begegnen zu können.

Aufgabe der vorliegenden Erfindung ist das Bereitstellen eines einfachen Verfahrens zur Herstellung von Oxymethylen-Homo- oder -Copolymeren (nachstehend auch "POM" genannt) hoher Stabilität, das eine effiziente Deaktivierung der Reaktionsmischung gestattet.

Eine weitere Aufgabe der vorliegenden Erfindung ist die Bereitstellung eines Verfahrens zur Herstellung von POM hoher Stabilität, das mit einfachen Mitteln und energetisch günstig durchzuführen ist.

Noch eine weitere Aufgabe der vorliegenden Erfindung ist die Bereitstellung von ausgewählten Oxymethylen-Homo- und -Copolymeren, die sich durch eine sehr hohe Stabilität auszeichnen.

Es wurde jetzt in überraschender Weise gefunden, dass man durch den Einsatz von ausgewählten Kettenüberträgern bei der Polymerisation und durch Deaktivierung der Reaktionsmischung durch Behandeln mit ausgewählten Deaktivatoren in homogener Phase auf einfache Weise sehr stabiles POM erzeugen kann.

Die vorliegende Erfindung betrifft ein Verfahren zur Herstellung von Oxymethylen-Homopolymeren der allgemeinen Formel I

$$R^1-(O-CH_2)_n-O-R^2 \qquad (I),$$

Noch eine weitere Aufgabe der vorliegenden Erfindung ist die Bereitstellung von ausgewählten Oxymethylen-Homo- und -Copolymeren, die sich durch eine sehr hohe Stabilität auszeichnen.

Es wurde jetzt in überraschender Weise gefunden, dass man durch den Einsatz von ausgewählten Kettenüberträgern bei der Polymerisation und durch Deaktivierung der Reaktionsmischung durch Behandeln mit ausgewählten Deaktivatoren in homogener Phase auf einfache Weise sehr stabiles POM erzeugen kann.

Die vorliegende Erfindung betrifft ein Verfahren zur Herstellung von Oxymethylen-Homopolymeren der allgemeinen Formel I

$$R^1-(O-CH_2)_n-O-R^2 \qquad (I),$$

worin $R^1$ und $R^2$ unabhängig voneinander Alkylreste sind und n eine ganze Zahl von größer oder gleich 500 bedeutet umfassend die Maßnahmen:

i) heterogene Polymerisation eines -$CH_2$-O- Einheiten bildenden Monomeren in Gegenwart eines Acetals des Formaldehyds und eines Initiators der kationischen Polymerisation wobei die heterogene Polymerisation eine Fällungspolymerisation ist, welche bei einer Polymerisationstemperatur zwischen 60°C und 140°C erfolgt, und

ii) Deaktivierung des Initiators und/oder der aktiven Polymerketten durch Behandlung des in Schritt i) hergestellten Polymerisats in homogener Phase mit einem aprotischen Lösungsmittel, das basisch ist und/oder das eine gelöste Base enthält, wobei die Deaktivierung bei einer Temperatur zwischen 130°C und 160°C erfolgt.

In einer weiteren Ausführungsform betrifft die Erfindung ein Verfahren zur Herstellung von Oxymethylen-Copolymeren enthaltend die Struktureinheiten der Formeln II und III sowie Endgruppen der Formel IV

$$-(O-CH_2)m- \qquad (II),$$

$$-O-C_oH_{2o}- \qquad (III),$$

$$-OR^1 \qquad (IV),$$

oder enthaltend die Struktureinheiten der Formeln II, V und gegebenenfalls IV sowie Endgruppen der Formel IV

$$-(O-CH_2)_m- \qquad (II),$$

$$-O-(R^3-O)_p- \qquad (V),$$

$$-OR^1 \qquad (IV),$$

worin $R^1$ ein Alkylrest ist,
m eine ganze Zahl von 1 bis 1000 bedeutet,
o eine ganze Zahl von 2 bis 6 ist,
p eine ganze Zahl von 3 bis 6 ist, und
$R^3$ ein p-wertiger organischer Rest ist, umfassend die Maßnahmen:

i) heterogene Polymerisation eines -$CH_2$-O- Einheiten bildenden Monomers zusammen mit einem -O-$C_oH_{2o}$-Einheiten bildenden Monomer in Gegenwart eines Acetals des Formaldehyds und eines Initiators der kationischen Polymerisation oder heterogene Polymerisation eines -$CH_2$-O- Einheiten bildenden Monomers zusammen mit einem -O-$(R^3-O)_p$- Einheiten bildenden Monomer und gegebenenfalls mit einem -O-$C_oH_{2o}$- Einheiten bildenden Monomer in Gegenwart eines Acetals des Formaldehyds und eines Initiators der kationischen Polymerisation wobei die heterogene Polymerisation eine Fällungspolymerisation ist, welche bei einer Polymerisationstemperatur zwischen 60°C und 140°C. erfolgt, und

ii) Deaktivierung des Initiators und/oder der aktiven Polymerketten durch Behandlung des in Schritt i) hergestellten Polymerisats in homogener Phase mit einem aprotischen Lösungsmittel, das basisch ist und/oder das eine gelöste Base enthält, wobei die Deaktivierung bei einer Temperatur zwischen 130°C und 160°C erfolgt.

R$^1$ und R$^2$ bedeuten unabhängig voneinander Alkylreste, insbesondere C$_1$ bis C$_6$- Alkylreste, die bevorzugt geradkettig sind. Ganz besonders bevorzugt sind R$^1$ und R$^2$ unabhängig voneinander Methyl, Ethyl, Propyl oder Butyl.

R$^3$ leitet sich von einem Verzweiger ab. Als Verzweiger werden beispielsweise drei- oder höherwertige Alkohole oder deren Derivate, vorzugsweise drei- bis sechswertige Alkohole oder deren Derivate, eingesetzt. Bevorzugte Derivate Dazu wird ein -CH$_2$-O- Einheiten bildendes Monomer oder ein Gemisch verschiedener Monomerer mit üblichen Initiatoren der kationischen Polymerisation und mit Acetalen des Formaldehyds als Regler in an sich bekannter Weise umgesetzt. Die Polymerisation kann drucklos oder vorzugsweise bei Drucken bis zu 500 bar, beispielsweise bei Drucken zwischen 2 und 500 bar, erfolgen.

Die Polymerisationstemperatur liegt unterhalb der Schmelzetemperatur des entstehenden Homo- oder Copolymeren.

Polymerisationstemperaturen für die Fällungspolymerisation bewegen sich im Bereich von 60 bis 140 °C, vorzugsweise von 70 bis 120 °C. Bevorzugte Drucke für die Fällungspolymerisation bewegen sich im Bereich von 0 bis 10 bar.

Zur Herstellung der Oxymethylen-Homo- oder -Copolymeren wird ein -CH$_2$-O-Einheiten bildendes Monomer oder ein Gemisch verschiedener Monomerer in der oben beschriebenen Weise umgesetzt.

Bei den Oxymethylen-Homo- oder -Copolymeren handelt es sich im Allgemeinen um unverzweigte lineare Polymere, die in der Regel mindestens 50 mol-%, vorzugsweise mindestens 80 mol-%, insbesondere mindestens 90 mol%, Oxymethyleneinheiten (-CH$_2$-O-) enthalten. Gewünschtenfalls können geringe Mengen von Verzweigern eingesetzt werden. Üblicherweise beträgt die Menge an Verzweigern nicht mehr als 1 Gew.-%, bezogen auf die zur Herstellung der Oxymethylen-Homo- oder -Copolymeren verwendeten Gesamtmonomermenge, vorzugsweise nicht mehr als 0,3 Gew.-%.

Die Molekulargewichte, charakterisiert als Volumenschmelzindex MVR, dieser Polymeren können innerhalb weiter Bereiche schwanken. Typische MVR-Werte betragen 0,1 bis 100 ml/10 min, bevorzugt 1 bis 80 ml/10min, gemessen nach EN ISO 1133 bei 190 °C bei einer Belastung von 2,16 kg.

Oxymethylen-Homopolymere leiten sich von Formaldehyd oder seinen cyclischen Polymensationstemperaturen für die Fällungspolymerisation bewegen sich im Bereich von 60 bis 140 °C, vorzugsweise von 70 bis 120 °C. Bevorzugte Drucke für die Fällungspolymerisation bewegen sich im Bereich von 0 bis 10 bar.

Zur Herstellung der Oxymethylen-Homo- oder -Copolymeren wird ein -CH$_2$-O-Einheiten bildendes Monomer oder ein Gemisch verschiedener Monomerer in der oben beschriebenen Weise umgesetzt.

Bei den Oxymethylen-Homo- oder -Copolymeren handelt es sich im Allgemeinen um unverzweigte lineare Polymere, die in der Regel mindestens 50 mol%, vorzugsweise mindestens 80 mol-%, insbesondere mindestens 90 mol-%, Oxymethyleneinheiten (-CH$_2$-O-) enthalten. Gewünschtenfalls können geringe Mengen von Verzweigern eingesetzt werden. Üblicherweise beträgt die Menge an Verzweigern nicht mehr als 1 Gew.-%, bezogen auf die zur Herstellung der Oxymethylen-Homo- oder -Copolymeren verwendeten Gesamtmonomermenge, vorzugsweise nicht mehr als 0,3 Gew.-%.

Die Molekulargewichte, charakterisiert als Volumenschmelzindex MVR, dieser Polymeren können innerhalb weiter Bereiche schwanken. Typische MVR-Werte betragen 0,1 bis 100 ml/10 min, bevorzugt 1 bis 80 ml/10min, gemessen nach EN ISO 1133 bei 190 °C bei einer Belastung von 2,16 kg.

Oxymethylen-Homopolymere leiten sich von Formaldehyd oder seinen cyclischen Oligomeren, wie Trioxan oder Tetroxan, ab.

Oxymethylen-Copolymere leiten sich von Formaldehyd oder seinen cyclischen Oligomeren, insbesondere von Trioxan, und von cyclischen Ethern, Aldehyden, wie Glyoxylsäureester, cyclischen Acetalen, die gegebenenfalls substituiert sein können, und/oder linearen Oligo- oder Polyacetalen ab.

Bevorzugte Monomere dieser Art sind Ethylendiglycid, Diglycidylether und Diether aus Glycidylen und Formaldehyd, Dioxan oder Trioxan im Molverhältnis 2 : 1, sowie Diether aus 2 Mol Glycidylverbindung und 1 Mol eines aliphatischen Diols mit 2 bis 8 C-Atomen, wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

In ähnlicher Weise kann auch eine trifunktionelle Verbindung wie Trimethylolpropantriglycidylether als drittes Monomer eingesetzt werden.

Besonders bevorzugt eingesetzte -CH$_2$-O- Einheiten bildende Monomere sind Formaldehyd oder ganz besonders bevorzugt Trioxan.

Bei der Polymerisation in heterogener Phase fällt das entstehende Polymere aus der anfänglich flüssigen Polymerisationsmischung aus.

Das Molekulargewicht der entstehenden (Co)polymeren wird durch Einsatz von Acetalen des Formaldehyds (Kettenüberträger) eingestellt. Diese führen auch zum Entstehen von Alkylether-Endgruppen des (Co)polymeren, so dass eine separate Umsetzung mit Verkappungsreagenzien entbehrlich ist.

Als Kettenüberträger werden monomere oder oligomere Acetale des Formaldehyds eingesetzt.

Bevorzugte Kettenüberträger sind Verbindungen der Formel VI

$$R^1\text{-}(O\text{-}CH_2)_q\text{-}O\text{-}R^2 \qquad\qquad (VI),$$

worin $R^1$ und $R^2$ unabhängig voneinander Alkylreste, wie Butyl, Propyl, Ethyl und insbesondere Methyl, und q eine ganze Zahl von 1 bis 100 bedeuten.

Besonders bevorzugte Kettenüberträger sind Verbindungen der Formel VI, worin q=1 ist, ganz besonders bevorzugt Methylal.

Die Kettenüberträger werden üblicherweise in Mengen von bis zu 50.000 ppm, vorzugsweise von 100 bis 5.000 ppm, besonders bevorzugt 500 bis 1.500 ppm bezogen auf das Monomer(gemisch), eingesetzt.

Als Initiatoren kommen die üblicherweise bei der Herstellung von Oxymethylen-Homopolymeren oder -Copolymeren eingesetzten kationischen Starter in Frage. Beispiele dafür sind Protonensäuren, wie fluorierte oder chlorierte Alkyl- und Arylsulfonsäuren, z.B. Trifluormethansulfonsäure, Trifluormethansulfonsäureanhydrid, oder Lewis-Säuren, wie z.B. Zinntetrachlorid, Arsenpentafluorid, Phosphorpentafluorid und Bortrifluorid, sowie deren Komplexverbindungen, wie wie z.B. Bortrifluorid-Etherate, und Carbokationenquellen, wie Triphenyl-methylhexafluorophosphat.

Die Initiatoren werden üblicherweise in Mengen von 0,005 bis 50 ppm, vorzugsweise von 0,01 bis 5 ppm, besonders bevorzugt von 0,02 bis 2 ppm, bezogen auf das Monomer(gemisch) eingesetzt.

Nach der Polymerisation wird das feste oder flüssige Polymerisationsgemisch mit einem aprotischen Lösungsmittel, das basisch ist und/oder eine gelöste Base enthält, in homogener Phase behandelt. Dadurch werden der Katalysator und/oder aktive Polymerketten, die sich nach der Polymerisation noch im Reaktionsgemisch befinden, rasch und vollständig deaktiviert.

Als Basen werden solche Verbindungen verwendet, die zum Abbruch der Polymerisation führen. Dazu zählen Protonenakzeptoren wie Triethylamin und basisch wirkende aprotische Lösungsmittel wie Dimethylformamid. Es können also basisch wirkende aprotische Lösungsmittel allein als Deaktivatoren eingesetzt werden oder aprotische Lösungsmittel, die nicht notwendigerweise basisch sein müssen, in Kombination mit einer darin gelösten Base. Ein Beispiel dafür ist eine Lösung von Triethylamin in Dimethylsulfoxid oder eine Lösung von Triethylamin in Trioxan.

Die Behandlung mit der Deaktivatorlösung aus aprotischen Lösungsmittel und gegebenenfalls einer Base kann durch Isolieren des entstandenen Polymeren und rasches Auflösen in der Deaktivatorlösung erfolgen. Die Deaktivierung des Polymeren kann durch Isolierung des in Schritt i) hergestellten Oxymethylen-Homo-oder Copolymeren nach der Polymerisation erfolgen, beispielsweise durch Abkühlen der Polymerschmelze und Vermahlen zu Pulver gefolgt vom Auflösen dieses Pulvers in dem aprotischen Lösungsmittel, das basisch ist und/oder eine gelöste Base enthält. In einer weiteren Verfahrensvariante kann das heiße Fällungspolymerisat in das aprotische Lösungsmittel, das basisch ist und/oder eine gelöste Base enthält, eingebracht werden.

Vorzugsweise wird das während der Polymerisation ausgefällte Polymere durch Temperaturerhöhung aufgeschmolzen und die entstandene homogene Phase mit der Deaktivatorlösung behandelt. Bei dieser bevorzugten Verfahrensvariante erfolgt die Deaktivierung des Polymeren durch direktes Behandeln des in Schritt i) hergestellten Oxymethylen-Homo- oder Copolymers nach der Polymerisation, indem das heiße Fällungspolymerisat durch Erhitzen aufgeschmolzen wird und mit dem aprotischen Lösungsmittel, das basisch ist und/oder eine gelöste Base enthält, behandelt wird.

Das erfindungsgemäße Verfahren umfasst bevorzugt zwischen Schritten i) und ii) einen Schritt ia), worin das Reaktionsgemisch, gegebenenfalls zusammen mit einem aprotischen Lösungsmittel für das Polymere erhitzt wird, so daß ein homogenes Gemisch entsteht. Das Erhitzen kann durch Heizen des Deaktivatorgefässes und/oder durch Zuführen einer heißen Deaktivatorlösung erfolgen.

Der Anteil an Lösungsmittel muss ausreichend gewählt werden, um bei den Temperaturen und Drucken des Deaktivierungsschrittes eine homogene Phase erzielen zu können. Typischerweise sind mindestens 10 Gew.-%, vorzugsweise 20 bis 80 Gew.-% an Lösungsmittel, bezogen auf die Masse an Polymer, erforderlich. Typische Deaktivierungstemperaturen bewegen sich im Bereich von 120 °C bis 200 °C, vorzugsweise von 130 °C bis 160 °C.

Typische Deaktivierungsdrucke bewegen sich im Bereich von 1 bis 500 bar, vorzugsweise von 1 bis 50 bar.

Beispiele für Lösungsmittel für den Deaktivierungsschritt sind polare und aprotische Lösungsmittel, wie Dimethylformamid, Dimethylacetamid, Dimethylsulfoxid, oder cyclische Acetale, Dioxolan und insbesondere Trioxan.

Das Lösungsmittel kann selbst basisch sein oder enthält eine gelöste Base, vorzugsweise primäre, sekundäre oder insbesondere tertiäre Amine.

Besonders bevorzugt wird ein aprotisches organisches Lösungsmittel eingesetzt, insbesondere Trioxan, das ein Amin, vorzugsweise ein tertiäres Amin, ganz besonders bevorzugt Triethylamin oder das ein primäres Amin, vorzugsweise Melamin, enthält.

Polymerisation und Desaktivierung können in den für die Herstellung von POM-Homo- oder -Copolymeren bekannten Reaktoren erfolgen. Typischerweise setzt man Kneter, Extruder oder vorzugsweise mit statischen Mischern ausgelegte Rohrreaktoren ein, die temperierbar und druckfest ausgelegt sind.

Bevorzugt werden Schritte i) und ii) bei erhöhten Temperaturen und Drucken ausgeführt.

Besonders bevorzugt werden Schritte i) und ii) zwei hintereinander geschalteten Reaktoren ausgeführt.

Die Polymerisationsdauer kann in weiten Bereichen schwanken und bewegt sich typischerweise im Bereich von 10 Sekunden bis 2 Stunden, vorzugsweise von 15 Sekunden bis 1 Stunde und besonders bevorzugt von 20 bis 50 Sekunden.

20 bis 80 Gew.-% an Lösungsmittel, bezogen auf die Masse an Polymer, erforderlich.

Deaktivierungstemperaturen bewegen sich im Bereich von 130 °C bis 160 °C.

Typische Deaktivierungsdrucke bewegen sich im Bereich von 1 bis 500 bar, vorzugsweise von 1 bis 50 bar.

Beispiele für Lösungsmittel für den Deaktivierungsschritt sind polare und aprotische Lösungsmittel, wie Dimethylformamid, Dimethylacetamid, Dimethylsulfoxid, oder cyclische Acetale, Dioxolan und insbesondere Trioxan.

Das Lösungsmittel kann selbst basisch sein oder enthält eine gelöste Base, vorzugsweise primäre, sekundäre oder insbesondere tertiäre Amine.

Besonders bevorzugt wird ein aprotisches organisches Lösungsmittel eingesetzt, insbesondere Trioxan, das ein Amin, vorzugsweise ein tertiäres Amin, ganz besonders bevorzugt Triethylamin oder das ein primäres Amin, vorzugsweise Melamin, enthält.

Polymerisation und Desaktivierung können in den für die Herstellung von POM-Homo- oder -Copolymeren bekannten Reaktoren erfolgen. Typischerweise setzt man Kneter, Extruder oder vorzugsweise mit statischen Mischern ausgelegte Rohrreaktoren ein, die temperierbar und druckfest ausgelegt sind.

Bevorzugt werden Schritte i) und ii) bei erhöhten Temperaturen und Drucken ausgeführt.

Besonders bevorzugt werden Schritte i) und ii) zwei hintereinander geschalteten Reaktoren ausgeführt.

Polymerlösungen werden diese in der Entspannungszone zunächst auf Umgebungsdruck reduziert, bevor das Absaugen der Restmonomeren erfolgt.

Vorzugsweise wird dazu die Polymerlösung nach Schritt ii) unter Aufrechterhaltung des Druckes in einen Extruder übergeführt, in dem die Entspannung und das Absaugen der Monomer und Lösungsmittelreste erfolgt.

Besonders bevorzugt wird ein Zweischneckenextruder verwendet.

In der Entspannungszone können gegebenenfalls bereits Stabilisatoren und Verarbeitungshilfsmittel (nachstehend auch "Zusätze" genannt) in das Polymerisat eingearbeitet werden. Diese Zusätze sind so auszuwählen, daß sie durch die nachfolgende Extraktionsstufe nicht wieder aus dem Polymerisat entfernt werden.

In einer bevorzugten Variante des erfindungsgemäßen Verfahrens wird nach der Abtrennung der Monomer- und Lösungsmittelreste in den Extruder eine Mischung von Zusätzen eindosiert und in das heiße Polyoxymethylen-Homo- oder -Copolymer eingearbeitet.

Als Komponenten der Mischung von Zusätzen lassen sich die üblicherweise zum Stabilisieren und/oder Modifizieren von Oxymethylen-Polymeren verwendeten Verbindungen einsetzen.

Dabei handelt es sich beispielsweise um Antioxidantien, Säurefänger, Formaldehydfänger, UV-Stabilisatoren oder Wärme-Stabilisatoren. Daneben kann die Mischung von Zusätzen Verarbeitungshilfen enthalten, beispielsweise Haftvermittler, Gleitmittel, Nukleierungsmittel, Entformungsmittel, Füllstoffe, Verstärkungsmaterialien oder Antistatika sowie Zusätze, die der Formmasse eine gewünschte Eigenschaft verleihen, wie Farbstoffe und/oder Pigmente und/oder Schlagzähmodifiziermittel und/oder elektrische Leitfähigkeit vermittelnde Zusätze; sowie Mischungen dieser Zusätze, ohne jedoch den Umfang auf die genannten Beispiele zu beschränken.

Nach dem Abtreiben der Monomer- und Lösungsmittelreste in der Entspannungszone wird die Polymerschmelze verfestigt. Dieses kann innerhalb oder unmittelbar nach dem Verlassen der Entspannungzone erfolgen. Anschließen wird das verfestigte und gegebenenfalls additivierte Polymerisat in an sich bekannter Weise granuliert.

In einer Extraktionsstufe können verbliebene Restmonomere und/oder Oligomere und/oder Lösungsmittel und/oder andere Verunreinigungen aus dem Polymerisat entfernt werden.

Granulieren und Extraktion kann in an sich bekannten Aggregaten erfolgen.

An die Extraktionsstufe schließt sich vorzugsweise eine Trocknung an, um das Granulat von Resten des anhaftenden Extraktionsmittels zu befreien.

Danach kann das Polymere gegebenenfalls in an sich bekannter Weise mit Zusätzen versehen werden. In dieser Verfahrensstufe können auch solche Zusätze zugefügt werden, die in der Extraktionsstufe wieder aus dem Polymerisat herausgelöst worden wären.

Eine bevorzugte Variante des erfindungsgemäßen Verfahrens ist in der Figur dargestellt.

Diese zeigt einen ersten Reaktor (1), einen dahinter geschalteten zweiten Reaktor (2), und einen dahinter geschalteten dritten Reaktor (3).

In den ersten Reaktor (1) wird ein Gemisch aus -CH$_2$-O-Gruppen bildendem Monomer, vorzugsweise Trioxan, zusammen mit einem Acetal des Formaldehyds (4), vorzugsweise Methylal, und einem Initiator der kationischen Polymerisation (5) eingeführt. Im ersten Reaktor (1) erfolgt die Fällungspolymerisation, beispielsweise bei Temperaturen von 80 °C und Drucken von 1 bis 10 bar. Die mittlere Verweildauer des Reaktionsgemisches im ersten Reaktor beträgt etwa 30 Sekunden. Danach wird das Reaktions-gemisch in den zweiten Reaktor (2) transportiert. Dem Reaktionsgemisch wird ein Amin (6) gegebenenfalls gelöst in Trioxan zugefügt. Der Trioxangehalt im zweiten Reaktor (2) wird so eingestellt, dass dieser mindestens 10 Gew.-%, bezogen auf das Polymere, beträgt. Im zweiten Reaktor (2) wird das Reaktionsgemisch erhitzt, beispielsweise auf Temperaturen von 150 °C. Die mittlere Verweildauer des Reaktionsgemisches im zweiten Reaktor beträgt ebenfalls etwa 30 Sekunden. Unter den Druck- und Temperaturbedingungen im Reaktor bildet sich eine Lösung des Polymeren in Trioxan aus. Danach wird das Reaktionsgemisch in den dritten Reaktor (3) transportiert. Trioxan, Monomerreste und gegebenenfalls weitere flüchtige Bestandteile (7) werden dem Reaktionsgemisch hier entzogen. Dieses erfolgt in der dargestellten Ausführungsform in mehreren Stufen. In diesem Reaktor kann eine nicht dargestellte Additivierung des POM mit den oben beschriebenen Zusätzen erfolgen. Das Endprodukt wird aus dem Reaktor als Stoffstrom (8) ausgeschleust.

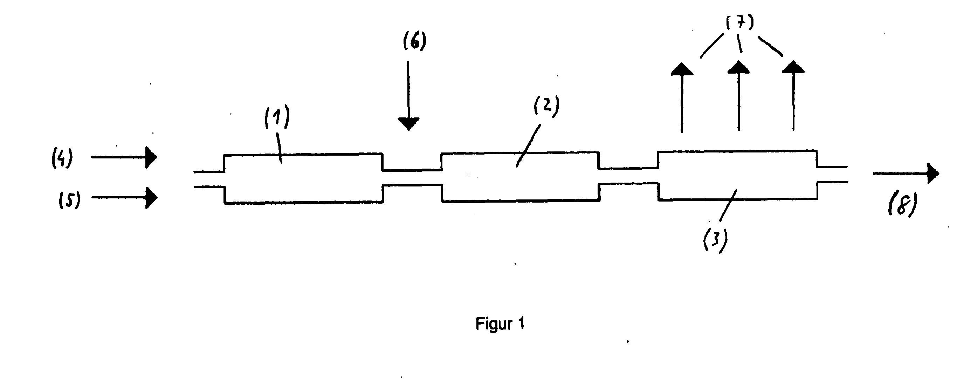

In Figur 1 wird also ein bevorzugtes Verfahren beschrieben, das folgende Schritte umfasst:

a) Trioxan, Methylal und gegebenenfalls Dioxolan werden als Lösung in einem ersten Reaktor vorgelegt,
b) die Polymerisation wird durch Zugabe eines Initiators der kationischen Polymerisation bei solchen Drucken und Temperaturen gestartet, dass das entstehende Polymere aus dem Reaktionsgemisch ausfällt,
c) das Reaktionsgemisch enthaltend das ausgefällte Polymere wird aus dem ersten Reaktor in einen zweiten Reaktor übergeführt, wobei
d) dem Reaktionsgemisch eine Base und gegebenenfalls Trioxan und/oder Dimethylacetamid enthaltend eine darin gelöste Base zugesetzt wird, so dass der Gehalt an Trioxan und gegebenenfalls an Dimethylacetamid im zweiten Reaktor mindestens 10 Gew.-%, bezogen auf das Polymere, beträgt,
e) das Reaktionsgemisch im zweiten Reaktor wird auf eine Temperatur erhitzt, so dass das Polymere sich löst,
f) das Reaktionsgemisch wird aus dem zweiten Reaktor ausgetragen, und
g) das deaktivierte Polymer vom Trioxan und gegebenenfalls vorhandenem Dimethylacetamid befreit.

Mit den erfindungsgemäßen Verfahren lassen sich mit Ether-Endgruppen stabilisierte Oxymethylen-Homo- und -Copolymere erzeugen, die eine äußerst hohe thermische Stabilität aufweisen.

Diese Polymeren sind erheblich stabiler, als die in der US-A-3,161,616 beschriebenen Polymeren. Es wird angenommen, dass das erfindungsgemäße Verfahren der direkten Einführung von Etherendgruppen eine nochmalige Verbesserung der Polymerstabilität zur Folge hat.

Die Erfindung betrifft daher auch Oxymethylen-Homopolymere, die gegebenenfalls bis zu 0,5 Gew.-% an einpolymerisierten Oxyethyleneinheiten und/oder bis zu 1 Gew.-% an einpolymerisierten Verzweigern aufweisen, bei denen mindestens 95 % aller Endgruppen, vorzugsweise mindestens 99 % aller Endgruppen, und insbesondere mindestens 99,9 % aller Endgruppen Alkoxy-Reste sind, wobei die Oxymethylen-Homopolymeren die eine Zersetzungsgeschwindigkeit, gemessen bei 222 °C, von weniger als 0,005 Gew.-% / Minute, bevorzugt von weniger als 0.001 Gew.-% / Minute, aufweisen.

Die Messung der Zersetzungsgeschwindigkeit erfolgt wie in der US-A-3,161,616 beschrieben. Es wird also die thermische Zersetzung des Polymeren bei 222 °C in Inertgasatmosphäre ermittelt, die näherungsweise als Reaktion erster Ordnung dargestellt werden kann.

Als Zersetzungsgeschwindigkeit k wird die Konstante der Differentialgleichung

$$-dw/dt = k * w$$

verwendet. In dieser Gleichung bedeutet w das Gewicht des Polymeren, dass nach Ablauf der Zeit t unzersetzt vorliegt.

Besonders bevorzugte Polymere weisen zu mindestens 99 %, bezogen auf alle Endgruppen, insbesondere zum mindestens 99,9 % Alkoxyreste als Endgruppen auf, vorzugsweise Methoxyreste.

Ganz besonders bevorzugte Oxymethylenpolymere besitzen eine Zersetzungsgeschwindigkeit, gemessen bei 222 °C, von weniger als $5*10^{-4}$ Gew.-% / Minute.

Weitere besonders bevorzugte Oxymethylenpolymere weisen einen Volumenschmelzindex MVR von 1 bis 80 ml/10 min auf, gemessen nach EN ISO 1133 bei 190 °C und bei einer Belastung von 2,16 kg.

Die erfindungsgemäß hergestellten Oxymethylen-Homo- und -Copolymeren können in an sich bekannter Weise durch Formverfahren, beispielsweise durch Blasformen, Spritzguss oder Extrusion, zu Formkörpern weiterverarbeitet werden.

Die besonders bevorzugten Oxymethylen-Homopolymere zeichnen sich durch eine hohe chemische und thermische Stabilität aus und zeigen eine ausgezeichnete Schlagzähigkeit.

Die nachstehenden Vergleichsbeispiele erläutern die Erfindung ohne diese auf diese Ausführungsformen zu beschränken.

Vergleichsbeispiele 1-4 und Vergleichsbeispiel V1

100 Gewichtsteile Trioxan wurden mit den in der Tabelle angegebenen Anteilen an Methylal vermischt. 100 g dieser Mischung wurden in eine auf 80 °C temperierte, getrocknete Aluminiumtube eingegeben. Die Tube wurde verschlossen und in einem Wasserbad bei einer Temperatur von 80 °C über einen Zeit von 10 Minuten getempert. Danach wurden 0,1 ppm Trifluormethansulfonsäure (bezogen auf Trioxan) als 0,1 gewichtsprozentige Lösung in Diethylglykoldimethylether mittels einer Spritze zugegeben. Die Polymerisationslösung wurde kräftig geschüttelt, bis die Polymerisationsreaktion einsetzte. Nach Verfestigung der Reaktionsmischung wurde die Aluminiumtube noch weitere 30 Minuten bei der Reaktionstemperatur von 80 °C gelagert. Anschließend wurde die Probe abgekühlt, zerkleinert und in Dimethylacetamid enthaltend 1.000 ppm Triethylamin aufgelöst. Nach Abdampfen des Lösungsmittels im Vakuum wurde der MVR des erhaltenen POM-Homopolymeren bestimmt. Die Messung erfolgte gemäß DIN ISO 1133 bei 190 °C mit einem Auflagegewicht von 2,16 kg.

Im Vergleichsversuch wurde das Polymer anstelle des Lösens in Dimethylacetamid in Methanol ausgekocht.

Die Mengen an eingesetztem Kettenüberträger und die Ergebnisse der Bestimmung des MVR sind in der nachfolgenden Tabelle dargestellt. Man erkennt, dass das Molekulargewicht des erzeugten Polymeren durch die Menge an Kettenüberträger kontrolliert werden kann und dass die Deaktivierung mit einem protischen Lösungsmittel zu einem erheblichen Molekulargewichtsabbau des Polymeren führt.

| Beispiel Nr. | Methylal (ppm) | MVR (ml/10 min) |
|---|---|---|
| 1 | 700 | 1,35 |
| 2 | 1000 | 3,56 |
| 3 | 1500 | 6,16 |
| 4 | 2000 | 20 |
| V1 | 1000 | 20 |

Vergleichsbeispiel 5:

Die Zersetzungsgeschwindigkeit des Polymeren aus Beispiel 2 wurde bei 222 °C in Inertgasatmosphäre bestimmt. Der Gewichtsverlust betrug 145 ppm/h.

**Patentansprüche**

1. Verfahren zur Herstellung von Oxymethylen-Homopolymeren der allgemeinen Formel I

$$R^1\text{-}(O\text{-}CH_2)_n\text{-}O\text{-}R^2 \qquad (I),$$

worin $R^1$ und $R^2$ unabhängig voneinander Alkylreste sind und n eine ganze Zahl von größer oder gleich 500 bedeutet, umfassend die Maßnahmen:

i) heterogene Polymerisation eines $-CH_2-O-$ Einheiten bildenden Monomers in Gegenwart eines Acetals des Formaldehyds und eines Initiators der kationischen Polymerisation, wobei die heterogene Polymerisation eine Fällungspolymerisation ist, welche bei einer Polymerisationstemperatur zwischen 60°C und 140°C erfolgt, und
ii) Deaktivierung des Initiators und/oder der aktiven Polymerketten durch Behandlung des in Schritt i) hergestellten Polymerisats in homogener Phase mit einem aprotischen Lösungsmittel, das basisch ist und/oder das eine gelöste Base enthält, wobei die Deaktivierung bei einer Temperatur zwischen 130°C und 160°C erfolgt.

2. Verfahren zur Herstellung von Oxymethylen-Copolymeren enthaltend die Struktureinheiten der Formeln II und III sowie Endgruppen der Formel IV

$$-(O\text{-}CH_2)_m\text{-} (II), \quad -O\text{-}C_oH_{2o}\text{-} (III), \quad -OR^1 \qquad (IV),$$

oder enthaltend die Struktureinheiten der Formeln II, V und gegebenenfalls IV sowie Endgruppen der Formel IV

$$-(O\text{-}CH_2)_m\text{-} (II), \quad -O\text{-}(R^3\text{-}O)_P\text{-} (V), \quad -OR^1 \qquad (IV),$$

worin $R^1$ ein Alkylrest ist,
m eine ganze Zahl von 1 bis 1000 bedeutet,
o eine ganze Zahl von 2 bis 6 ist,
p eine ganze Zahl von 3 bis 6 ist, und
$R^3$ ein p-wertiger organischer Rest ist

umfassend die Maßnahmen:

i) heterogene Polymerisation eines $-CH_2-O-$ Einheiten bildenden Monomers zusammen mit einem $-O-C_oH_{2o}-$ Einheiten bildenden Monomer in Gegenwart eines Acetals des Formaldehyds und eines Initiators der kationischen Polymerisation oder heterogene Polymerisation eines $-CH_2-O-$ Einheiten bildenden Monomers zusammen mit einem $-O-(R^3-O)_P-$ Einheiten bildenden Monomer und gegebenenfalls mit einem $-O-C_oH_{2o}-$ Einheiten bildenden Monomer in Gegenwart eines Acetals des Formaldehyds und eines Initiators der kationischen Polymerisation, wobei die heterogene Polymerisation eine Fällungspolymerisation ist, welche bei einer Polymerisationstemperatur zwischen 60°C und 140°C erfolgt, und
ii) Deaktivierung des Initiators und/oder der aktiven Polymerketten durch Behandlung des in Schritt i) hergestellten Polymerisats in homogener Phase mit einem aprotischen Lösungsmittel, das basisch ist und/oder das eine gelöste Base enthält, wobei die Deaktivierung bei einer Temperatur zwischen 130°C und 160°C erfolgt.

3. Verfahren nach einem der Ansprüche 1 oder 2, **dadurch gekennzeichnet, dass** als $-CH_2-O-$ Einheiten bildendes Monomer Formaldehyd oder vorzugsweise Trioxan eingesetzt wird.

4. Verfahren nach einem der Ansprüche 1 bis 3, **dadurch gekennzeichnet, dass** als Acetal des Formaldehyds eine Verbindung der Formel VI eingesetzt wird

$$R^1-(O-CH_2)_q-O-R^2 \qquad (VI),$$

worin $R^1$ und $R^2$ unabhängig voneinander Alkylreste, vorzugsweise Methyl sind und q eine ganze Zahl von 1 bis 100 bedeutet.

5. Verfahren nach Anspruch 4, **dadurch gekennzeichnet, dass** als Acetal des Formaldehyds eine Verbindung der Formel VI eingesetzt wird, in der q=1 ist, vorzugsweise Methylal.

6. Verfahren nach einem der Ansprüche 1 bis 5, **dadurch gekennzeichnet, dass** als Initiator der kationischen Polymerisation eine Lewis-Säure, eine Brönstedt-Säure oder eine Carbokationenquelle eingesetzt wird.

7. Verfahren nach einem der Ansprüche 1 bis 6, **dadurch gekennzeichnet, dass** das in Schritt i) hergestellte Oxymethylen-Homo- oder Copolymer nach der Polymerisation abgekühlt wird, zu Pulver vermahlen wird und dass das Pulver in dem aprotischen Lösungsmittel, das basisch ist und/oder eine gelöste Base enthält, aufgelöst wird.

8. Verfahren nach einem der Ansprüche 1 bis 6, **dadurch gekennzeichnet, dass** das hergestellte Oxymethylen-Homo- oder Copolymer zwischen den Schritten i) und ii) in einem Schritt ia) durch Erhitzen aufgeschmolzen wird und das entstandene homogene Gemisch mit dem aprotischen Lösungsmittel, das basisch ist und/oder eine gelöste Base enthält, behandelt wird.

9. Verfahren nach einem der Ansprüche 1 bis 6, **dadurch gekennzeichnet, dass** das in Schritt i) hergestellte Oxymethylen-Homo- oder Copolymer direkt nach der Polymerisation als heißes Fällungspolymerisat in dem aprotischen Lösungsmittel, das basisch ist und/oder eine gelöste Base enthält, aufgelöst wird.

10. Verfahren nach einem der Ansprüche 1 bis 9, **dadurch gekennzeichnet, dass** als aprotisches Lösungsmittel Trioxan eingesetzt wird, das ein Amin, vorzugsweise ein tertiäres Amin, ganz besonders bevorzugt Triethylamin, enthält.

11. Verfahren nach einem der Ansprüche 1 bis 9, **dadurch gekennzeichnet, dass** als aprotisches Lösungsmittel Dimethylacetamid eingesetzt wird, das gegebenenfalls ein Amin, vorzugsweise ein tertiäres Amin, ganz besonders bevorzugt Triethylamin, enthält.

12. Verfahren nach einem der Ansprüche 1 bis 11 , **dadurch gekennzeichnet, dass** die Schritte i) und ii) in zwei hintereinander geschalteten Reaktoren ausgeführt werden und zwischen diesen Schritten die nicht umgesetzten Restmonomeren im Reaktionsgemisch belassen oder nur zu höchstens 50 Gew.-%, vorzugsweise zu höchstens 20 Gew.-%, besonders bevorzugt zu höchstens 10 Gew.-%, bezogen auf den Anteil der im Reaktionsgemisch verbliebenen Restmonomeren aus dem Reaktionsgemisch abgeführt werden.

13. Verfahren nach Anspruch 12, **dadurch gekennzeichnet, dass** die Restmonomeren zwischen den Schritten i) und ii) im Reaktionsgemisch belassen oder zu höchstens 20 Gew.-% zwischen den Schritten i) und ii) aus dem Reaktionsgemisch entfernt werden und dass Schritte i) und ii), insbesondere die Schritte i), ia) und ii), unter erhöhtem Druck durchgeführt werden.

14. Verfahren nach einem der Ansprüche 1 bis 13, **dadurch gekennzeichnet, dass** dieses keine zusätzlichen Maßnahmen zum Kettenverschluss beinhaltet.

15. Verfahren nach einem der Ansprüche 1 bis 14, **dadurch gekennzeichnet, dass**

a) Trioxan, Methylal und gegebenenfalls Dioxolan oder 1,3-Dioxepan als Lösung in einem ersten Reaktor vorgelegt werden,
b) die Polymerisation durch Zugabe eines Initiators der kationischen Polymerisation bei solchen Drucken und Temperaturen gestartet wird, daß das entstehende Polymere aus dem Reaktionsgemisch ausfällt,
c) das Reaktionsgemisch enthaltend das ausgefällte Polymere aus dem ersten Reaktor in einen zweiten Reaktor übergeführt wird, wobei
d) dem Reaktionsgemisch eine Base und gegebenenfalls Trioxan und/oder Dimethylacetamid enthaltend eine darin gelöste Base zugesetzt wird, so daß der Gehalt an Trioxan und gegebenenfalls Dimethylacetamid im zweiten Reaktor mindestens 10 Gew.-%, bezogen auf das gesamte Gemisch, beträgt,
e) das Reaktionsgemisch im zweiten Reaktor auf eine Temperatur erhitzt wird, so daß das Polymere sich löst,
f) das Reaktionsgemisch aus dem zweiten Reaktor ausgetragen wird, und
g) das deaktivierte Polymer durch Entfernen des Trioxans und des gegebenenfalls vorhandenen Dimethylacetamids isoliert wird.

## Claims

1. A process for the preparation of oxymethylene homopolymers of the general formula I

$$R^1\text{-}(O\text{-}CH_2)_n\text{-}O\text{-}R^2 \qquad (I),$$

wherein $R^1$ and $R^2$ are alkyl residues independent of one another and n is an integer larger than or equal to 500, comprising the steps of :

i) heterogeneous polymerization of a $-CH_2-O-$ unit forming monomer in the presence of an acetal of the formaldehyde and of an initiator of the cationic polymerization, wherein the heterogeneous polymerization is a precipitation polymerization, the polymerization temperature of which is carried out between 60 °C and 140 °C, and
ii) deactivation of the initiator and/or of the active polymer chains by treatment of the step i) prepared polymerizate in homogenous phase with an aprotic solvent, which is basic and/or comprises a dissolved base, wherein the deactivation is carried out at a temperature of between 130 °C and 160 °C.

2. A process for the preparation of oxymethylene copolymers comprising the structural unit of formulas II and III as well as terminal groups of formula IV

$$-(O\text{-}CH_2)_m\text{-} \qquad (II),$$

$$-O\text{-}C_oH_{2o} \qquad (III),$$

$$-OR^1 \qquad (IV),$$

or comprising the structural units of formula II, V and optionally IV as well as terminal groups of formula IV

$$-(O\text{-}CH_2)_m\text{-} \qquad (II),$$

$$-O-(R^3-O)_p- \qquad (V),$$

$$-OR^1 \qquad (IV),$$

wherein $R^1$ is an alkyl residue,
m is an integer from 1 to 1000,
o is an integer from 2 to 6,
p is an integer from 3 to 6, and
$R^3$ is a p-valent organic residue
comprising the steps:

i) heterogeneous polymerization of a $-CH_2-O-$ unit forming monomer together with a $-O-C_oH_{2o}$ unit forming monomer in the presence of an acetal of the formaldehyde and of an initiator of the cationic polymerization or heterogeneous polymerization of a $-CH_2-O-$ unit forming monomer together with a $-O-(R^3-O)_p-$ unit forming monomer and optionally with a $-O-C_oH_{2o}-$ unit forming monomer in the presence of an acetal of the formaldehyde and of an initiator of the cationic polymerization, wherein the heterogeneous polymerization is a precipitation polymerization, the polymerization temperature of which is carried out between 60 °C and 140 °C, and

ii) deactivation of the initiator and/or of the active polymer chains by treatment of the step i) prepared polymerizate in homogenous phase with an aprotic solvent, which is basic and/or comprises a dissolved base, wherein deactivation is carried out at a temperature of between 130 °C and 160 °C.

3. The process according to claims 1 or 2, **characterized in that** formaldehyde or preferably trioxane is used as a $-CH_2-O-$ unit forming monomer.

4. The process according to any one of claims 1 to 3, **characterized in that** a compound of the formula VI is used as an acetal of the formaldehyde

$$R^1-(O-CH_2)_q-O-R^2 \qquad (VI),$$

wherein $R^1$ and $R^2$ are alkyl residues independent of one another, preferably are methyl and q is an integer from 1 to 100.

5. The process according to claim 4, **characterized in that** a compound of the formula VI, where q=1, preferably methylal, is used as an acetal of the formaldehyde.

6. The process according to any one of claims 1 to 5, **characterized in that** a Lewis acid, a Brönstedt acid or a carbocation source is used as an initiator of the cationic polymerisation.

7. The process according to any one of claims 1 to 6, **characterized in that** the step i) prepared oxymethylene homo- or copolymer is cooled after the polymerization, milled to powder and the powder dissolved in the aprotic solvent, which is basic and/or comprises a dissolved base.

8. The process according to any one of claims 1 to 6, **characterized in that** the prepared oxymethylene homo- or copolymer is melted by heating in a step ia) between the steps i) and ii) and the resulting homogenous mixture is treated with the aprotic solvent, which is basic and/or comprises a dissolved base.

9. The process according to any one of claims 1 to 6, **characterized in that** the step i) prepared oxymethylene homo- or copolymer is dissolved directly after the polymerization as a hot precipitation polymer in the aprotic solvent, which is basic and/or comprises a dissolved base.

10. The process according to any one of claims 1 to 9, **characterized in that** trioxane is used as an aprotic solvent, which comprises an amine, preferably a tertiary amine, most preferably triethylamine.

11. The process according to any one of claims 1 to 9, **characterized in that** dimethylacetamide is used as an aprotic solvent, which optionally comprises an amine, preferably a tertiary amine, most preferably triethylamine.

12. The process according to any one of claims 1 to 11, **characterized in that** steps i) and ii) are carried out in two reactors connected in series and the non reacted residue monomers in the reaction mixture leave between these steps or are removed only to a maximum of 50 wt.%, preferably to a maximum of 20 wt.%, more preferably to a maximum of 10 wt.%, in relation to the portion of that in the reaction mixture which is remaining residue monomers from the reaction mixture.

13. The process according to claim 12, **characterized in that** the residue monomers leave between steps i) and ii) in the reaction mixture or are removed to a maximum of 20 wt.% between the steps i) and ii) from the reaction mixture and where steps i) and ii), in particular steps i), ia) and ii), are carried out at elevated pressure.

14. The process according to any one of claims 1 to 13, **characterized in that** it includes no additional steps for chain closure.

15. The process according to any one of claims 1 to 14, **characterized in that**

a) trioxane, methylal, and optionally dioxalane or 1,3-dioxepane are charged to a first reactor as a solution,
b) the polymerization is started by addition of an initiator of the cationic polymerization at such pressures and temperatures that the resulting polymer precipitates from the reaction mixture,
c) the reaction mixture comprising the precipitated polymer from the first reactor is transferred to a second reactor, wherein
d) a base or optionally trioxane and/or dimethylacetamide comprising a dissolved base therein is added to the reaction mixture so that the quantity of the trioxane and optionally dimethylacetamide in the second reactor amounts to at least 10 wt.% in relation to the whole mixture,
e) the reaction mixture in the second reactor is heated to a temperature, so that the polymer dissolves itself,
f) the reaction mixture is discharged from the second reactor, and
g) the deactivated polymer is isolated through removal of the trioxane and the optionally present dimethylacetamide.

**Revendications**

1. Procédé de production d'homopolymères d'oxyméthylène de formule générale I

$$R^1\text{-(O-CH}_2\text{)}_n\text{-O-R}^2 \qquad \text{(I)},$$

dans laquelle $R^1$ et $R^2$ sont indépendamment l'un de l'autre des radicaux alkyle et n est un nombre entier supérieur ou égal à 500, comprenant les étapes de :

i) polymérisation hétérogène d'un monomère formant des motifs -CH$_2$-O- en présence d'un acétal de formaldéhyde et d'un initiateur de polymérisation cationique, où la polymérisation hétérogène est une polymérisation par précipitation qui s'effectue à une température de polymérisation entre 60 °C et 140 °C, et
ii) désactivation de l'initiateur et/ou des chaînes de polymère actives par traitement du polymérisat produit à l'étape i) en phase homogène avec un solvant aprotique qui est basique et/ou qui contient une base dissoute, dans laquelle la désactivation s'effectue à une température entre 130 °C et 160 °C.

2. Procédé de production de copolymères d'oxyméthylène contenant les motifs structurels de formules II et III et des groupes terminaux de formule IV

$$\text{-(O-CH}_2\text{)}_m \qquad \text{(II)},$$

$$\text{-O-CH}_{2o}\text{-} \qquad \text{(III)},$$

$$\text{-OR}^1 \qquad \text{(IV)},$$

ou contenant les motifs structurels de formule II, V et éventuellement IV et des groupes terminaux de formule IV

$$\text{-(O-CH}_2\text{)}_m \qquad \text{(II)},$$

$$-O-(R^3-O)_p- \qquad (V),$$

$$-OR^1 \qquad (IV),$$

dans laquelle $R^1$ est un radical alkyle,
m est un nombre entier de 1 à 1000,
o est un nombre entier de 2 à 6,
p est un nombre entier de 3 à 6, et
$R^3$ est un radical organique de valeur p
comprenant les étapes de :

> i) polymérisation hétérogène d'un monomère formant des motifs $-CH_2-O-$conjointement à un monomère formant des motifs $-O-C_oH_{2o}-$ en présence d'un acétal de formaldéhyde et d'un initiateur de polymérisation cationique ou une polymérisation hétérogène d'un monomère formant des motifs $-CH_2-O-$, conjointement à un monomère formant des motifs $-O-(R^3-O)_p$ et éventuellement avec un monomère formant des motifs $-O-C_oH_{2o}$ en présence d'un acétal de formaldéhyde et d'un initiateur de polymérisation cationique, où la polymérisation hétérogène est une polymérisation par précipitation qui s'effectue à une température de polymérisation entre 60 °C et 140 °C, et
> ii) désactivation de l'initiateur et/ou des chaînes de polymère actives par traitement du polymérisat produit à l'étape i) en phase homogène avec un solvant aprotique qui est basique et/ou qui contient une base dissoute, dans laquelle la désactivation s'effectue à une température entre 130 °C et 160 °C.

**3.** Procédé selon l'une des revendications **1** ou **2**, **caractérisé en ce que** l'on utilise du formaldéhyde ou de préférence du trioxane comme monomère formant des motifs $-CH_2-O-$.

**4.** Procédé selon l'une des revendications **1** à **3**, **caractérisé en ce que** l'on utilise comme acétal du formaldéhyde un composé de formule VI

$$R^1-(O-CH_2)_q-O-R^2 \qquad (VI),$$

dans laquelle $R^1$ et $R^2$ sont indépendamment l'un de l'autre des radicaux alkyle, de préférence méthyle, et q est un nombre entier de 1 à 100.

**5.** Procédé selon la revendication **4**, **caractérisé en ce que** l'on utilise comme acétal du formaldéhyde un composé de formule VI, dans laquelle q = 1, de préférence un méthylal.

**6.** Procédé selon l'une des revendications **1** à **5**, **caractérisé en ce que** l'on utilise comme initiateur de polymérisation cationique un acide de Lewis, un acide de Brönstedt ou une source de carbocation.

**7.** Procédé selon l'une des revendications **1** à **6**, **caractérisé en ce que** l'homopolymère ou le copolymère d'oxyméthylène produit à l'étape i) est refroidi après la polymérisation, broyé en une poudre, et **en ce que** la poudre est dissoute dans le solvant aprotique qui est basique et/ou qui contient une base dissoute.

**8.** Procédé selon l'une des revendications **1** à **6**, **caractérisé en ce que** l'homopolymère ou le copolymère d'oxyméthylène produit est fondu entre les étapes i) et ii) à l'étape ia) par chauffage et le mélange homogène obtenu est traité avec le solvant aprotique qui est basique et/ou qui contient une base dissoute.

**9.** Procédé selon l'une des revendications **1** à **6**, **caractérisé en ce que** l'homopolymère ou le copolymère d'oxyméthylène produit à l'étape i) est dissous directement après la polymérisation sous forme de polymérisat de précipitation chaud dans le solvant aprotique qui est basique et/ou qui contient une base dissoute.

**10.** Procédé selon l'une des revendications **1** à **9**, **caractérisé en ce que** l'on utilise comme solvant aprotique du trioxane qui contient une amine, de préférence une amine tertiaire, de manière tout particulièrement préférée de la triéthylmine.

**11.** Procédé selon l'une des revendications **1** à **9**, **caractérisé en ce que** l'on utilise comme solvant aprotique du diméthylacétamide qui contient éventuellement une amine, de préférence une amine tertiaire, de manière tout particulièrement préférée de la triéthylamine.

**12.** Procédé selon l'une des revendications **1** à **11**, **caractérisé en ce que** les étapes i) et ii) sont réalisées dans deux réacteurs consécutifs et, entre ces étapes, les monomères résiduels n'ayant pas réagi sont laissés dans le mélange réactionnel et ne sont éliminés du mélange réactionnel qu'à hauteur au plus de 50 % en poids, de préférence au plus de 20 % en poids, de manière particulièrement préférée au plus de 10 % en poids par rapport à la proportion de monomères résiduels restants dans le mélange réactionnel.

**13.** Procédé selon la revendication **12**, **caractérisé en ce que** les monomères résiduels sont laissés entre les étapes i) et ii) dans le mélange réactionnel ou sont retirés à hauteur au plus de 20 % en poids entre les étapes i) et ii) du mélange réactionnel et **en ce que** les étapes i) et ii), en particulier les étapes i), ia) et ii), sont réalisées sous pression élevée.

**14.** Procédé selon l'une des revendications **1** à **13**, **caractérisé en ce que** celui-ci ne comprend pas d'étapes supplémentaires de fermeture de chaîne.

**15.** Procédé selon l'une des revendications **1** à **14**, **caractérisé en ce que**

a) l'on place du trioxane, du méthylal et éventuellement du dioxolane ou du 1,3-dioxépane en solution dans un premier réacteur,
b) la polymérisation est initiée par addition d'un initiateur de polymérisation cationique à des pressions et températures telles que le polymère obtenu précipite dans le mélange réactionnel,
c) le mélange réactionnel contenant le polymère précipité du premier réacteur est transféré dans un deuxième réacteur, où
d) on ajoute une base au mélange réactionnel et éventuellement du trioxane et/ou du diméthylacétamide contenant une base dissoute dans celui-ci de sorte que la teneur en trioxane et éventuellement en diméthylacétamide dans le deuxième réacteur soit d'au moins 10 % en poids par rapport au mélange total,
e) le mélange réactionnel dans le deuxième réacteur est chauffé à une température de sorte que le polymère soit dissous,
f) le mélange réactionnel est sorti du deuxième réacteur, et
g) le polymère désactivé est isolé par élimination du trioxane et du diméthylacétamide éventuellement présent.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436107 A
- US 3269988 A
- EP 1200500 B
- DE 3018898 A
- EP 80656 A
- JP 62267311 A
- JP 2000290334 A
- JP 2000290336 A
- GB 1524410 A
- GB 1040171 A

- JP 57080414 A
- JP 4114003 A
- JP 4145114 A
- DE S1158709 A
- US 3998791 A
- US 3393179 A
- DE 1445255 A
- US 4097453 A
- US 3161616 A
- GB 1524440 A